# EUROPEAN PATENT APPLICATION

(11) **EP 0 572 728 A1**
(43) Date of publication of application: **08.12.1993**
(21) Application number: 92202813.9
(22) Date of filing: 15.09.1992
(51) Int. Cl.: A01G 1/00

(54) **Sowing mat and method for manufacturing such a sowing mat**

(30) Priority: 03.06.1992 BE 9200507
(71) Applicant: VERVAEKE FIBRE, naamloze vennootschap, B-8520 Kuurne (BE)
(72) Inventor: Vervaeke, Antoine Michel Eric, B-8520 Kuurne (BE)
(74) Representative: Donné, Eddy

(57) **Abstract**

Sowing mat, characterized in that it exists of at least three layers, namely a natural bearing structure (2), a layer of seed (3) and a cover layer (4), which are made of biologically fully degradable materials and which are connected to each other through needling. The bearing structure may be made of jute, cotton, degradable non woven material or degradable tissue; the seed may be mixed with peat, additives, fertilizers and the like. The cover layer is made of several film layers and may consist of flax.

## Description

The present invention relates to a sowing mat, and to a method for manufacturing such a sowing mat.

More specifically, the invention relates to a sowing mat that can be applied in agriculture and horticulture for the seeding of different growths, for instance grass, flowers, vegetables, etc.

With usual sowing methods, the seeds are put directly in the ground to germinate, root and grow. As the seeds are located directly on the ground, they are subject to several external and climatological influences which can inhibit the germination of the seeds or prevent the anchoring of the roots.

Specifically for grass, this problem can be avoided by using turfs, but these are mostly heavy and therefore difficult to transport, handle and place.

A solution for the above-mentioned problems exists in the use of sowing mats.

Known sowing mats, which are used as an alternative for usual sowing methods, present several disadvantages, however. The composition of these known sowing mats comprises synthetic components which are not biodegradable, such as connective tissues made of nylon and/or polypropylene, so that the environment is burdened with the residues these mats leave after decomposition. The use of synthetic mats is therefore limited by the ever more severe environmental legislation. Moreover, these mats present a rather open structure which cannot prevent the growth of weeds, so that selective herbicides have to be used in order to avoid overgrowth by weeds. These synthetic mats can also not prevent that the seeds are washed away under the influence of erosion, for instance when the mats are placed on a slope.

The present invention aims at a sowing mat whereby the above mentioned disadvantages are excluded.

This invention therefore aims primarily at a sowing mat which can be realized from biologically 100% degradable materials and is therefore 100% kind to the environment.

Further, the invention aims at a sowing mat which can be used as protection against erosion on places that are difficult to be seeded, such as walks, verges, bridge flanks, etc.

As agricultural areas in the third world are also confronted more and more with loss of fertile farming-land because of erosion, namely erosion due to precipitation and especially wind erosion, the use of such a mat is very fit in certain cases.

The mat can also be used for bank reinforcement and for applications under water. In this way, among other things the colonisation by water plants in larger ponds (ponds on golf courses for instance) can be promoted. Also it is possible to obtain banks with an appropriate bank vegetation.

Another aim of this sowing mat is to make re-seeding of certain growths easier, for instance the re-seeding of bare spots in a lawn.

To this end, the invention relates to a sowing mat which consists of at least three layers, namely a natural bearing structure, a layer of seed and a covering layer, which is made of biologically fully degradable materials and which are connected to each other through needling.

The sowing mat is manufactured only of natural materials, which are, through the above-mentioned needling, connected to each other in such a way that a compact texture is obtained.

The dense texture of this sowing mat prevents the washing through of the seeds, and makes the sowing mat very appropriate for applications on inclining surfaces.

Another advantage of such a sowing mat according to the invention is that, due to its compactness, the growth of weeds is limited, and that thus the use of selective herbicides is avoided.

In a preferred embodiment, water absorbing substances are added to the layer of seed, for instance peat, in order to optimize moisture retention.

The bearing structure exists preferably of a jute tissue, but can also exist of a cotton tissue or a degradable "non-woven" film. Preferably, flax is used for the cover layer.

The sowing mat is manufactured according to the invention by subsequently applying seed on a bearing structure; the manufacturing of a cover layer which is placed on the seed and finally bringing together these layers to form a sowing mat, by needling the whole.

The needling of the different layers to form a compact whole preferably takes place in a needling machine where a great number of needles push the different layers together so that the layers are attached to each other and the whole is compressed to a thin sowing mat.

In order to better show the characteristics according to the invention, hereafter a preferred embodiment is described, as an example without any limitative character, reference being made to the accompanying drawings, wherein:
figure 1 represents a perspective view of a sowing mat according to the invention;
figure 2 represents a cross section according to line II-II in figure 1;
figure 3 is a schematic view of a method for manufacturing a sowing mat according to the invention.

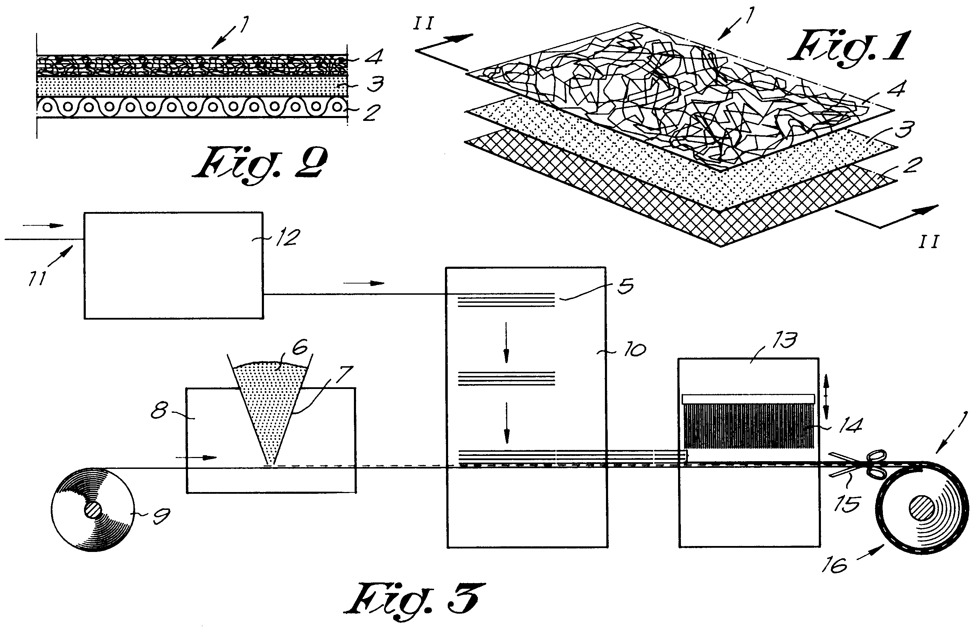

As represented in figures 1 and 2, the sowing mat 1 according to the invention exists of at least three different layers, namely a natural bearing structure 2 which forms the bottom side of the sowing mat 1, a layer of seed 3 applied on this bearing structure 2, and, on top, a cover layer 4.

Preferably, the sowing mat 1 is made of natural fibres which are fully biodegradable so that, after decomposition, no traces are left in the environment.

The bearing structure 2 preferably exists of jute, but can also be manufactured of cotton or a degradable "non-woven" film, or can also be made of a combination of different materials.

The seed 3 can originate from grasses, flowers, vegetables, corn sorts or the like, and is preferably mixed with peat. Eventually, other additives can also be added to the seed, such as nutrients, disinfectants or the like, depending on the requisites of the seed and of the soil on which the sowing mat is to be applied.

The cover layer 4 preferably exists of an accumulation of several very thin films 5 which form an isolating layer, thus protecting the layer underneath, existing of the seed 3 and eventual additives, from external influences. For these film layers 5, use can be made of flax, so that a thin flax mat is obtained.

The cover layer 4 is, according to the invention, connected to the bearing structure 2 through needling. This needling, which is not shown in the figures, exists in that the whole is compressed and pierced by means of needles or pegs, in such a way that the layers are pressed together at the place of the needles.

The needling preferably takes place over the entire surface. The subsequent layers are placed above each other and connected to each other in such a way that the fibres form a closed texture thus preventing weeds to grow so that the use of selective herbicides is not necessary, and preventing the washing through of the seeds by the compact composition in which they are located.

The presence of peat permits a great amount of moisture to be retained, which creates, in combination with the isolating action of the above layers optimal circumstances for the germination of the seeds. The roots of the germinating seeds can anchor quickly in the soil with this sowing mat 1, and thus assure a fast "greening".

As represented in figure 3, the method for manufacturing the sowing mat 1 exists of several subsequent operations.

In a first step, the seed 3 is eventually mixed with peat and/or other additives to obtain a mixture 6 which is led in a funnel 7 of a scattering device 8. These operations can be performed by hand as well as by machine.

Then, the mixture 6 is scattered on the bearing structure 2 through the funnel 7 of the scattering device 8. This bearing structure 2, for instance jute, is preferably supplied continuously from a roll 9 and moved under the funnel 7.

These two layers are then brought to a film placing device 10 where thin film layers 5, preferably made of flax, are placed on top of the mixture 6. The production of the film layers 5 takes place parallelly with the activity of the scattering device 8 and takes place through a feeding mechanism 11 in order to bring flax fibres or an other material appropriate for this purpose to a card 12 where the fibres are separated from each other and laid parallel to each other in order to be transported to the film placing device 10 as a thin film. In this film placing device 10, several of these film layers 5 are stacked on top of each other on the mixture 6 until a layer of a certain thickness is obtained. This packet is still rather thick and the different layers lie loosely on top of each other.

Subsequently, the packet is led to a needling machine 13 where the different layers are compressed by a large number of needles 14 over the total surface of the packet. This needling machine 13 has a needle density of 7 to 14 needles per square cm, which pierce the different layers and thus press the fibres of these layers together to form a compact sowing mat 1.

The sowing mat 1 thus obtained is cut to the desired width by sideways knives 15 or an adapted cutting device, and further led to a rolling mechanism 16 which rolls up the sowing mat 1. In this way, the sowing mat 1 can easily be stocked, transported and applied to the soil to be treated.

The present invention is in no way limited to the embodiment described as an example and represented in the accompanying drawings, but such a sowing mat and method for manufacturing such a sowing mat can be realized according to different variants without leaving the scope of the invention.

## Claims

1. Sowing mat, characterized in that it exists of at least three layers, namely a natural bearing structure (2), a layer of seed (3) and a cover layer (4), which are made of biologically fully degradable materials and which are connected to each other through needling.

2. Sowing mat according to claim 1, characterized in that the cover layer (4) exists of several film layers (5).

3. Sowing mat according to claim 1 or 2, characterized in that the bearing structure (2) is made of jute.

4. Sowing mat according to claim 1 or 2, characterized in that the bearing structure (2) is made of cotton.

5. Sowing mat according to claim 1 or 2, characterized in that the bearing structure (2) is made of a degradable "non woven" material.

6. Sowing mat according to claim 1 or 2, characterized in that the bearing structure (2) is made of a degradable tissue.

7. Sowing mat according to one of the preceding claims, characterized in that the seed (3) is mixed with peat.

8. Sowing mat according to one of the preceding claims, characterized in that the seed (3) is mixed with additives such as fertilizers and the like.

9. Sowing mat according to one of the preceding claims, characterized in that the cover layer (4) exists of flax.

10. Sowing mat according to one of the preceding claims, characterized in that it has a closed texture.

11. Sowing mat according to one of the preceding claims, characterized in that the different layers are needled over their total surface.

12. Method for manufacturing a sowing mat according to claim 1, characterized in that it exists in subsequently applying a layer of seed (3) on a bearing structure (2); manufacturing a cover layer (4) which is placed on top of the seed (3); and finally bringing together the bearing structure (2), the seed (3) and the cover layer (4) to a sowing mat 1, by needling the whole.

13. Method according to claim 12, characterized in that the seed (3) is mixed with one or more additives.

14. Method according to claim 13, characterized in that as an additive at least peat is added.

15. Method according to claim 12, 13 or 14, characterized in that the cover layer (4) is made up of several film layers (5) which are obtained by means of a card (11).

16. Method according to one of the claims 12 to 15, characterized in that the cover layer (4) is applied on the lower layers by means of a film placing device (10).

17. Method according to one of the claims 12 to 16, characterized in that the seed (3), mixed with an additive or not, is applied to the bearing structure (2) by means of a scattering device (8).

18. Method according to one of the claims 12 to 17, characterized in that the sowing mat (1) is cut sideways by knives (15).
